# EUROPÄISCHE PATENTSCHRIFT

(11) **EP 0 663 174 B1**
(45) Veröffentlichungstag und Bekanntmachung des Hinweises auf die Patenterteilung: **21.05.1997**
(21) Anmeldenummer: 95100134.6
(22) Anmeldetag: 05.01.1995
(51) Int. Cl.: A47J 43/25, B26B 5/00, B26B 3/03

(54) **Küchengerät zum Schneiden von Obst, Gemüse oder dergleichen**
Kitchen appliance for cutting fruits, vegetables or the like
Dispositif culinaire pour couper des fruits, des légumes ou des produits similaires

(30) Priorität: 12.01.1994 DE 4400696; 28.01.1994 DE 9401443 U
(43) Veröffentlichungstag der Anmeldung: 19.07.1995
(73) Patentinhaber: ELM-Plastic GmbH, D-54647 Dudeldorf/Eifel (DE)
(72) Erfinder: Lonien, Hans, D-54647 Dudeldorf (DE); Möhs, Hans, D-54647 Dudeldorf (DE)
(74) Vertreter: Zinnecker, Armin, Dipl.-Ing.

(56) Entgegenhaltungen:
- EP-A- 0 042 143
- DE-B- 1 083 517
- FR-A- 693 755
- FR-A- 840 267
- US-A- 1 430 289
- US-A- 4 212 431

## Beschreibung

Die Erfindung betrifft ein Küchengerät zum Schneiden von Obst, Gemüse oder dergleichen mit einer unteren Führungsplatte und einer sich daran anschließenden oberen Führungsplatte, die an ihrer Vorderkante ein mit ihrer Ebene fluchtendes, horizontales Schneidmesser aufweist, wobei in der unteren Führungsplatte mehrere senkrecht zu ihrer Ebene verlaufende, vertikale Schneidmesser vorgesehen sind, die aus einem Blechstreifen gebildet sind.

Ein derartiges Küchengerät ist aus der EP-PS 42 143 bekannt.

Mit dem eingangs erwähnten und in der EP-PS 42 143 beschriebenen Küchengerät kann Obst, Gemüse oder dergleichen in Streifen geschnitten werden. Es ist ferner möglich das Schneidgut durch einen zweimaligen Schneidvorgang in Würfel zu schneiden, wobei das Schneidgut nach dem ersten Schneidvorgang um 90° gedreht wird. Das horizontale Schneidmesser verläuft vorzugsweise schräg zur Schneidrichtung. Es ist ferner vorzugsweise V-förmig gestaltet, besitzt also zwei Schneiden, die jeweils schräg in Schneidrichtung verlaufen und die in Schneidrichtung aufeinander zu verlaufen.

Die untere Führungsplatte ist vorzugsweise auswechselbar gestaltet. Sie kann ferner vorzugsweise in verschiedenen Höhen in das Küchengerät eingesetzt werden. Hierfür können seitliche Rahmenteile vorhanden sein, die mit der oberen Führungsplatte verbunden oder mit ihr einstückig sind und die Nuten zur Aufnahme der unteren Führungsplatte in verschiedenen Höhen aufweisen.

Die vertikalen Schneidmesser sind aus einem Blechstreifen gebildet, wobei die vertikalen Schneidmesser von dem Blechstreifen abgekantet sind, vorzugsweise im rechten Winkel. Ferner ist der Blechstreifen vorzugsweise in die untere Führungsplatte, die vorzugsweise aus Kunststoff gebildet ist, eingelassen, so daß der Blechstreifen innerhalb der unteren Führungsplatte liegt und lediglich die vertikalen Schneidmesser aus der unteren Führungsplatte herausragen.

Aus der DE-PS 10 83 517 ist ein Küchengerät zum Schneiden von Zwiebeln oder anderen Vegetabilien in gleichmäßige Würfel bekannt, das auf einer Schiebeunterlage vorgesehene, horizontale und gegebenenfalls vertikale Schneidelemente zum Scheiben- bzw. Würfelschneiden von Zwiebeln oder dergleichen aufweist. Sowohl die vertikalen als auch die horizontalen Schneidelemente bestehen aus einem Stück, beispielsweise Blech. Die vertikalen Schneidelemente sind aus dem oberhalb einer Unterlage vorgesehenen, gemeinsamen, an seiner Schnittkante gezahnten, quer zur Schnittrichtung angeordneten Blech in Richtung der Unterlage abgebogen. Die verbleibenden Kantenteile der Platte verlaufen in einem derart spitzen Winkel zur Arbeitsrichtung (Schnittrichtung), daß ein kontinuierlicher ziehender Schrägschnitt erzielt wird.

Bei dem eingangs angegebenen, aus der EP-PS 42 143 bekannten Küchengerät sind die vertikalen Schneidmesser aus einem durchgehenden Blechstreifen gebildet, wobei der Blechstreifen an seiner vom Schneidmaterial zuerst berührten, zur Schneidrichtung vorderen Längsseite quer zur Schneidrichtung in regelmäßigen Abständen parallel eingeschnitten ist und seine zwischen den Einschnitten liegenden Teile derart hochgebogen sind, daß sie in Draufsicht jeweils in Schneidrichtung weisen. Die Einschnitte sind gleich tief. Sie reichen jeweils nur bis zu einem hochgebogenen Teil. Die Längsseite mit den Einschnitten weist eine angeschliffene Außenkante auf.

Dementsprechend braucht bei dem aus der EP-PS 42 143 bekannten Küchengerät statt einer Vielzahl einzelner vertikaler Schneidmesser nur noch ein einheitliches Messerteil hergestellt und gehandhabt zu werden. Es können mehrere vertikale Schneidmesser auf einmal erhalten werden, was die Herstellung und die Montage vereinfacht.

Wenn allerdings das horizontale Schneidmesser nicht einheitlich in einer Richtung verläuft, müssen mehrere solche Messerteile in dem Küchengerät verwendet werden. Dies ist insbesondere dann erforderlich, wenn das horizontale Schneidmesser V-förmig ist und dementsprechend auch die vertikalen Schneidmesser in einer V-Form (in Draufsicht) angeordnet sind. Dann sind zwei Messerteile erforderlich. Die besonders vorteilhafte, V-förmige Anordnung des horizontalen Schneidmessers und der vertikalen Schneidmesser kann nach der EP-PS 42 143 also nur mit zwei Messerteilen realisiert werden.

Aufgabe der Erfindung ist es, ein Küchengerät der eingangs angegebenen Art zu verbessern.

Erfindungsgemäß wird diese Aufgabe dadurch gelöst, daß der Blechstreifen eine mit der Spitze in Schneidrichtung weisende V-Form aufweist und an seiner in Schneidrichtung hinteren Längsseite Ecken aufweist, die von der in Schneidrichtung folgenden Ecke weg weisen und die längs einer in Schneidrichtung verlaufenden Kante hochgebogen sind. Durch diese Ausgestaltung ist es insbesondere möglich, V-förmig angeordnete, vertikale Schneidmesser aus einem einzigen Blechstreifen bzw. Blechteil herzustellen.

Sowohl das horizontale Schneidmesser als auch die vertikalen Schneidmesser können aus Blechstreifen geringer Stärke bis herab zu einem Zehntel Millimeter hergestellt werden.

Bei dem Küchengerät nach der EP-PS 42 143 befinden sich die vertikalen Schneidmesser nicht auf der in Schneidrichtung hinteren Längsseite des Blechstreifens, sondern auf dessen in Schneidrichtung vorderen Längsseite. Aus diesem Grund können die vertikalen Schneidmesser bei der EP-PS 42 143 aus einem einfach geformten Blech hergestellt werden, nämlich einem Blechstreifen mit parallelen Längsseiten. Zur Formung der vertikalen Messer genügen Einschnitte an der vorderen Längsseite sowie ein Hochbiegen der zwischen den Einschnitten liegenden Teile. Die gerade Außenkante unterliegt keinem Stanzvorgang. Sie kann unmittelbar, also auch ohne Anschliff als Schneidkante benutzt werden.

Demgegenüber befinden sich bei der Erfindung die vertikalen Schneidmesser an der in Schneidrichtung hinteren Längsseite des Blechstreifens. Hierdurch wird der Vorteil erreicht, daß auch ein V-förmiger Blechstreifen einstückig sein kann.

Vorteilhafte Weiterbildungen der Erfindung sind in den Unteransprüchen beschrieben.

Die Ecken, die hochgebogen werden und die die vertikalen Schneidmesser bilden, können einen spitzen Winkel einschließen. Die beiden Kanten, die eine Ecke bilden, können also in einem spitzen Winkel aufeinander zu verlaufen. Dabei verläuft eine Gerade der Ecke vorzugsweise senkrecht zur Schneidrichtung, während die andere Gerade der Ecke vorzugsweise - in Schneidrichtung gesehen - von der (in Schneidrichtung) nächstfolgenden Ecke weg verläuft.

Eine weitere vorteilhafte Weiterbildung ist dadurch gekennzeichnet, daß der Blechstreifen an seiner in Schneidrichtung hinteren Längsseite eingeschnitten ist. Vorzugsweise ist der Blechstreifen in regelmäßigen Abständen eingeschnitten; zwei aufeinanderfolgende Einschnitte weisen also vorzugsweise jeweils den selben Abstand voneinander auf. Die Einschnitte verlaufen vorzugsweise im rechten Winkel zur Schneidrichtung. Sie führen von der in Schneidrichtung hinteren Längsseite nach innen. Zwischen zwei benachbarten Einschnitten ist jeweils eine Ecke vorhanden. Vorzugsweise reichen die Einschnitte bis zur Biegekante, aber nicht über diese hinaus.

Der Blechstreifen, aus dem die vertikalen Schneidmesser gebildet werden, ist in Draufsicht V-förmig.

Eine weitere vorteilhafte Weiterbildung ist dadurch gekennzeichnet, daß der Blechstreifen in die untere Führungsplatte, die vorzugsweise aus Kunststoff hergestellt ist, eingelassen ist. Die hochgebogenen, die Messer bildenden Ecken ragen dabei oben aus der unteren Führungsplatte heraus. Auch die obere Führungsplatte ist vorzugsweise aus Kunststoff.

Nach einer weiteren vorteilhaften Weiterbildung besteht die untere Führungsplatte aus einem Unterteil und einem Oberteil, zwischen die der Blechstreifen eingelegt ist und die durch eine Nut-Feder-Verbindung miteinander verbunden sind. Hierdurch wird eine erhebliche Stabilisierung der unteren Führungsplatte erreicht. Ferner wird verhindert, daß Wasser und damit Bakterien in das Unterteil eindringen können. Hierdurch wird die Hygiene erheblich verbessert.

Ein Ausführungsbeispiel der Erfindung wird nachstehend anhand der beigefügten Zeichnungen im einzelnen erläutert. In der Zeichnung zeigt
- Fig. 1: das Küchengerät in einer Ansicht von oben (Draufsicht),
- Fig. 2: einen Blechstreifen in einer Ansicht von oben (Draufsicht),
- Fig. 3: den in Fig. 2 gezeigten Blechstreifen mit hochgebogenen Ecken, ebenfalls von oben (Draufsicht),
- Fig. 4: den Blechstreifen mit hochgebogenen Ecken gemäß Fig. 3 in einer Seitenansicht,
- Fig. 5: eine weitere Ausführungsform eines Blechstreifens in einer Ansicht von oben (Draufsicht),
- Fig. 6: den in Fig. 5 dargestellten Blechstreifen mit hochgebogenen Ecken, ebenfalls in einer Ansicht von oben (Draufsicht),
- Fig. 7: den in Fig. 6 dargestellten Blechstreifen mit hochgebogenen Ecken in einer Seitenansicht,
- Fig. 8: ein Oberteil einer unteren Führungsplatte in einer Ansicht von unten,
- Fig. 9: einen Schnitt längs der Linie A-A in Fig. 9,
- Fig. 10: das zu dem in den Fig. 8 und 9 dargestellten Oberteil gehörende Unterteil der unteren Führungsplatte in einer Ansicht von oben,
- Fig. 11: einen Schnitt längs der Linie B-B in Fig. 10,
- Fig. 12: eine vergrößerte, den Fig. 9 und 11 entsprechende Schnittdarstellung des Oberteils gemäß Fig. 8 und 9 und des Unterteils gemäß Fig. 10 und 11 im zusammengebauten Zustand,
- Fig. 13: eine Vergrößerung der Einzelheit Z der Fig. 12,
- Fig. 14: eine andere Ausführungsform eines Oberteils einer unteren Führungsplatte in einer der Fig. 8 entsprechenden Ansicht von unten,
- Fig. 15: einen Schnitt längs der Linie C-C in Fig. 14,
- Fig. 16: das zu dem Oberteil gemäß Fig. 14 und 15 gehörende Unterteil der unteren Führungsplatte in einer der Fig. 10 entsprechenden Ansicht von oben und
- Fig. 17: einen Schnitt längs der Linie D-D in Fig. 16.

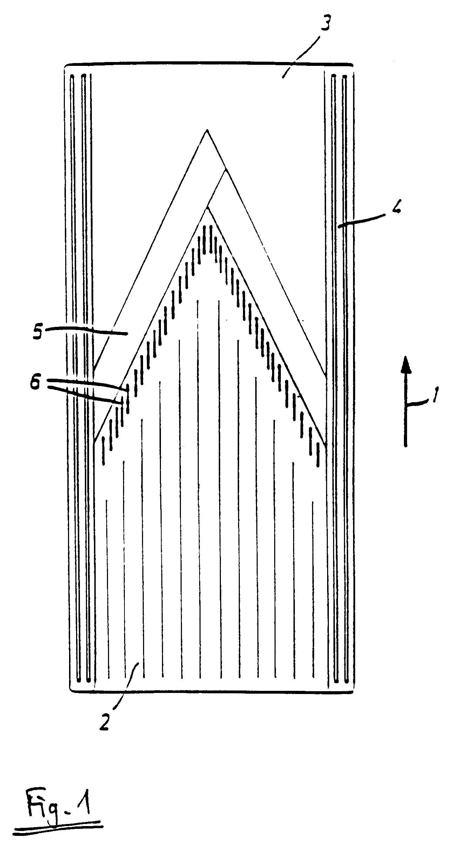

Das in Fig. 1 gezeigte Küchengerät besitzt eine untere Führungsplatte 2 und eine sich daran in Schneidrichtung 1 anschließende obere Führungsplatte 3, die an ihrer Vorderkante ein mit ihrer Ebene fluchtendes, horizontales Schneidmesser 5 aufweist, das - in Schneidrichtung 1 - V-förmig ausgestaltet ist. Die Ebenen der Führungsplatten 2, 3 verlaufen parallel zueinander und im Abstand voneinander. Mit der oberen Führungsplatte 3 sind seitliche Rahmenteile 4 einstückig verbunden, in denen Nuten zum Einschub der unteren Führungsplatte in verschiedenen Höhen vorgesehen sind.

In der unteren Führungsplatte 2 sind mehrere senkrecht zu ihrer Ebene verlaufende, vertikale Schneidmesser 6 vorgesehen, die aus einem Blechstreifen durch Stanzen und senkrechtes Abkanten gebildet sind und die senkrecht von diesem Blechstreifen abstehen. Der Blechstreifen ist in der aus Kunststoff bestehenden unteren Führungsplatte 2 versenkt. Lediglich die nach oben ragenden, vertikalen Schneidmesser 6 stehen aus der unteren Führungsplatte vor. Die vertikalen Schneidmesser 6 verlaufen parallel zueinander und in einem jeweils gleichen Abstand voneinander. Sie sind - entsprechend dem in der Draufsicht V-förmigen horizontalen Schneidmesser 5 - in einer V-Form angeordnet, so daß jedes vertikale Schneidmesser 6 den gleichen Abstand von der Schneidkante des horizontalen Schneidmessers 5 aufweist.

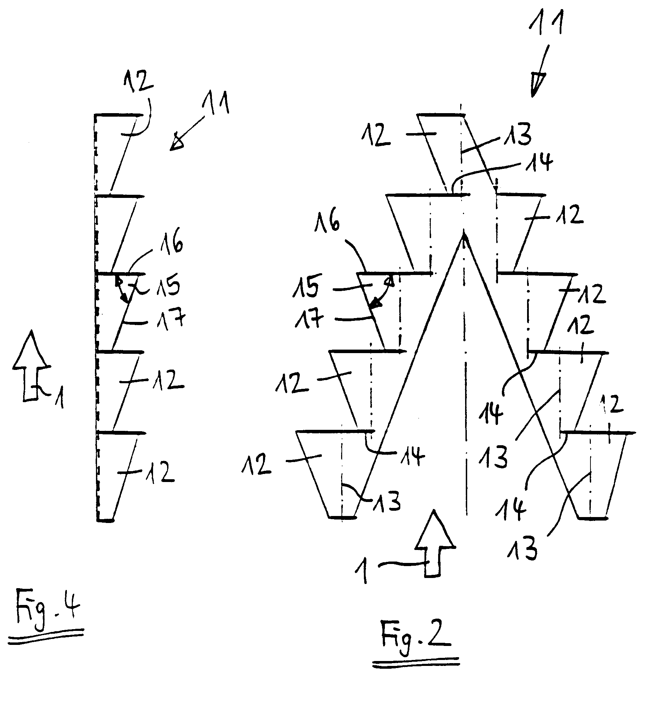

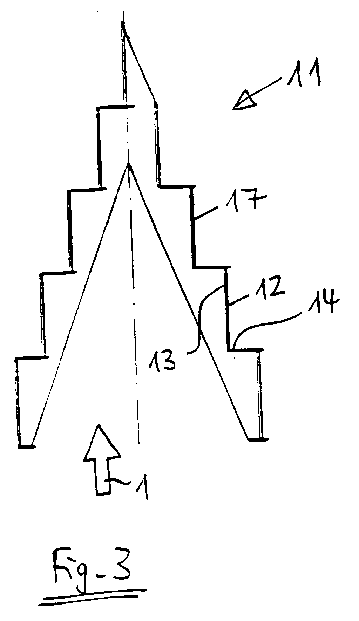

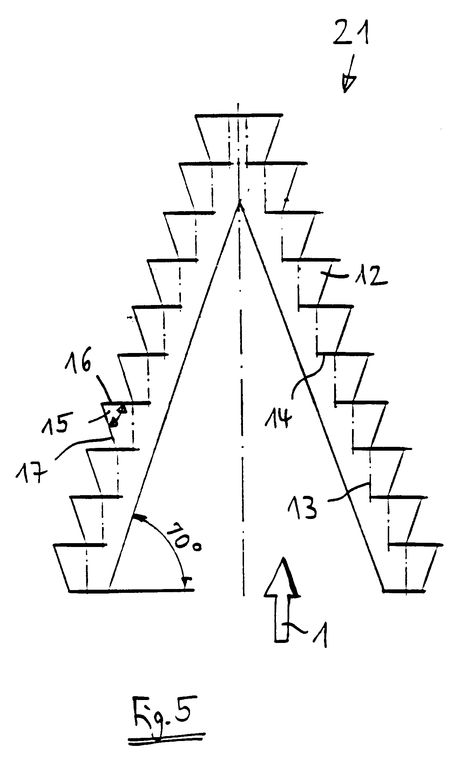

In den Fig. 2, 3 und 4 ist ein erstes Ausführungsbeispiel eines Blechstreifens 11 gezeigt, der an seiner in Schneidrichtung 1 hinteren Längsseite zahnartige Ecken 12 aufweist, die von der jeweils nächsten in Schneidrichtung folgenden Ecke 12 weg weisen. In der Fig. 2 ist die Ausgangsstellung des Blechstreifens 11 dargestellt. Die Ecken 12 werden dann längs einer in Schneidrichtung 1 verlaufenden Kante 13 im rechten Winkel hochgebogen, so daß der Blechstreifen 11 dann das in den Fig. 3 und 4 gezeigte Aussehen aufweist. Anschließend wird um den Blechstreifen 11 mit hochgebogenen Ecken 12 eine untere Führungsplatte aus Kunststoff geformt, so daß nur noch die Ecken 12, die auch als Zähne bezeichnet werden können, aus der unteren Führungsplatte nach oben vorstehen und auf diese Weise die in Fig. 1 gezeigten vertikalen Schneidmesser 6 bilden.

Der Blechstreifen 11 ist an seiner in Schneidrichtung 1 hinteren Längsseite in regelmäßigen Abständen eingeschnitten. Die Einschnitte 14 liegen jeweils zwischen zwei benachbarten Ecken 12. Dementsprechend liegt zwischen zwei benachbarten Einschnitten 14 jeweils eine Ecke 12. Alle Einschnitte 14 sind gleich tief. Sie reichen bis zur jeweils zugehörigen Biegekante 13. Ferner sind die Einschnitte 14 rechtwinklig zur Schneidrichtung 1. Es ist allerdings nicht unbedingt erforderlich, daß die Einschnitte 14 rechtwinklig zur Schneidrichtung 1 sind; die Einschnitte 14 können auch in einem anderen Winkel zur Schneidrichtung 1 verlaufen.

Jede Ecke 12 schließt einen spitzen Winkel 15 ein. Der Winkel 15 muß allerdings nicht unbedingt ein spitzer Winkel sein. Es ist auch möglich, den Winkel 15 als rechten Winkel oder als stumpfen Winkel auszugestalten. Die hintere Kante 16 der Ecke verläuft im rechten Winkel zur Schneidrichtung 1. Die äußere Kante 17 jeder Ecke verläuft im Winkel zur Schneidrichtung 1, und zwar derart, daß sie in Schneidrichtung 1 von der nächstfolgenden Ecke weg weist. Der Winkel 15 legt die Steigung der vertikalen Schneidmesser 6 fest.

Der die vertikalen Schneidmesser bildende Blechstreifen 11 besitzt in der Draufsicht die in Fig. 2 dargestellte V-Form. Er ist aus einem einzigen Blechstreifen, also einstückig, hergestellt. Die die Messer 6 bildenden Ecken 12 befinden sich jeweils an der Außenseite bzw. in Schneidrichtung 1 hinteren Seite.

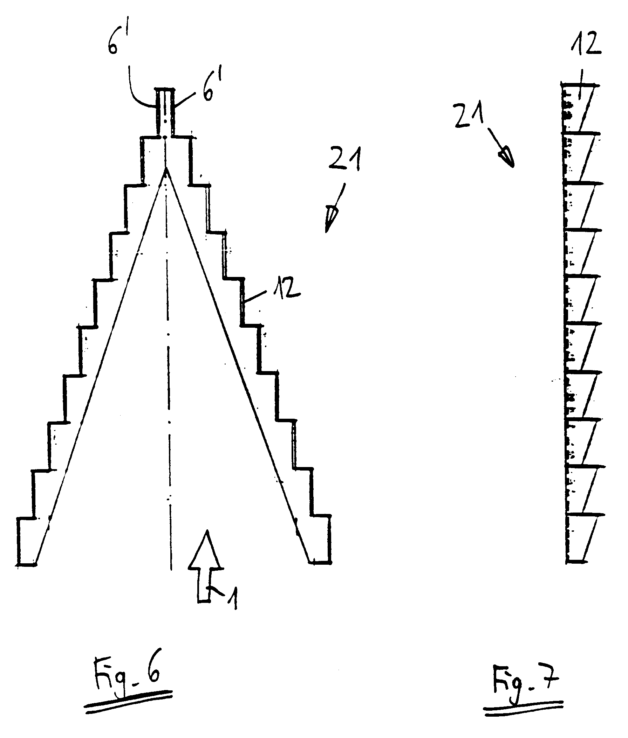

In den Fig. 5, 6 und 7 ist eine abgewandelte Ausführungsform 21 gezeigt, in der gleiche Teile mit gleichen Bezugszeichen versehen sind, so daß sie nicht erneut beschrieben werden müssen. Hier sind am in Schneidrichtung gesehen hinteren Ende des V-förmigen Blechstreifens zwei parallele vertikale Schneidmesser 6' vorhanden.

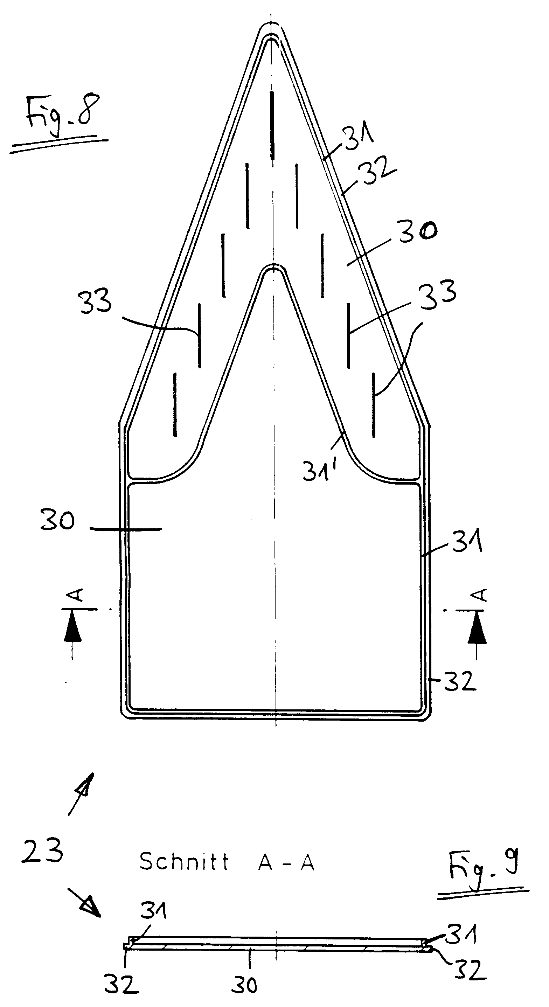

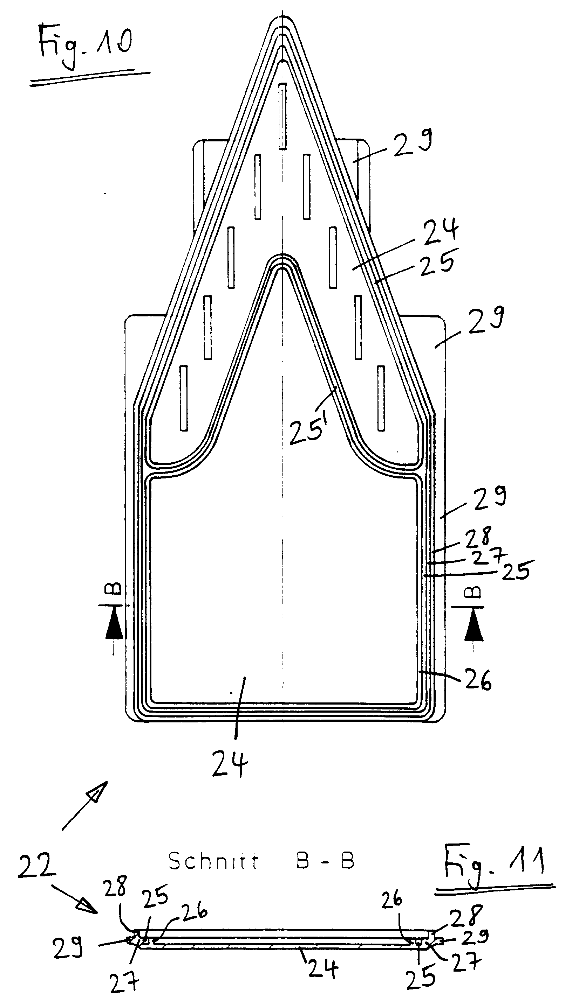

In den Fig. 8 bis 13 sind die Bestandteile einer unteren Führungsplatte 2 gezeigt, die aus einem Oberteil 22 und einem Unterteil 23 besteht, zwischen die der Blechstreifen eingelegt ist und die durch eine Nut-Feder-Verbindung miteinander verbunden sind. Das in den Fig. 10 und 11 dargestellte Unterteil 22 besteht aus einer Basisfläche 24, an deren Rand eine nach oben weisende, umlaufende, geschlossene Nut 25 vorgesehen ist. Die Nut wird von einem inneren, nach oben weisenden Vorsprung 26 und einem äußeren Vorsprung 27 begrenzt. Ferner ist ein weiterer nach oben weisender, umlaufender Vorsprung 28 außerhalb des Vorsprungs 27 vorhanden und eine äußere, horizontale Randfläche 29.

Von der am Rand umlaufenden Nut 25 zweigt eine weitere Nut 25' ab, die derart geformt ist, daß sie zusammen mit dem vorderen, spitz zulaufenden Teil der Nut 25 einen Blechstreifen der in den Fig. 2 bis 4 gezeigten Art umschließt. Dieser Blechstreifen wird in diesen Bereich eingelegt, und zwar derart, daß sein flaches Basisteil auf der Basis 24 des Oberteils 22 aufliegt und die von den Ecken 12 gebildeten Messer nach oben abstehen.

In den Fig. 8 und 9 ist das zum Unterteil 22 gehörende Oberteil 23 dargestellt. Es besteht aus einer Basisfläche 30, an deren äußerem Rand ein nach oben weisender Vorsprung 31 geschlossen umläuft. Der Vorsprung 31 bildet die Feder der Nut-Feder-Verbindung. Seine Kontur ist in der aus Fig. 8 ersichtlichen Weise derart geformt, daß sie spiegelbildlich mit der Kontur der Nut 25 übereinstimmt, so daß die von dem Vorsprung 31 gebildete Nut vollständig in die Feder 25 eingedrückt bzw. eingebracht werden kann. Dabei gelangt der weitere Vorsprung 31' in die weitere Nut 25'.

Die Abmessungen sind derart gewählt, daß die Feder 31, 31' in die Nut 25, 25' eingedrückt werden muß und dort aufgrund ihrer Eigenelastizität gehalten wird. Die Breite des Vorsprungs 31, 31' ist also geringfügig größer als die Breite der Nut 25, 25'.

In der Basisfläche 30 sind Schlitze 33 vorgesehen, und zwar in demjenigen Bereich, der von dem weiteren Vorsprung 31' und dem vorderen, spitz zulaufenden Teil des Vorsprungs 31 begrenzt wird, also in demjenigen Bereich, der den Blechstreifen aufnimmt. Diese Schlitze werden von den die Messer bildenden Ecken 12 des in den Fig. 2 bis 4 gezeigten Blechstreifens durchsetzt. Diese Ecken ragen durch das Oberteil 23 hindurch nach außen und bilden auf der nach oben weisenden Fläche des Oberteils 23 (also auf der Rückseite der Fig. 8) die Schneidmesser.

Außerhalb des umlaufenden Vorsprungs 31 ist ein horizontaler, umlaufender Rand 32 vorgesehen.

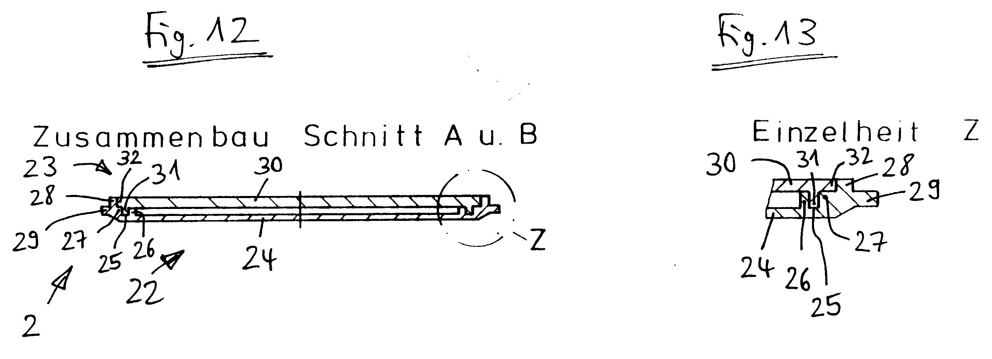

Die Fig. 12 und 13 zeigen das Unterteil 22 und das Oberteil 23 im zusammengebauten Zustand in einer den Fig. 9 und 11 entsprechenden Schnittansicht. Wie daraus ersichtlich, liegt der die Feder bildende Vorsprung 31 innerhalb der Nut 25, wodurch eine Nut-Feder-Verbindung geschaffen wird. Die äußere, umlaufende Endfläche des Randes 32 liegt innerhalb des weiteren Vorsprungs 28.

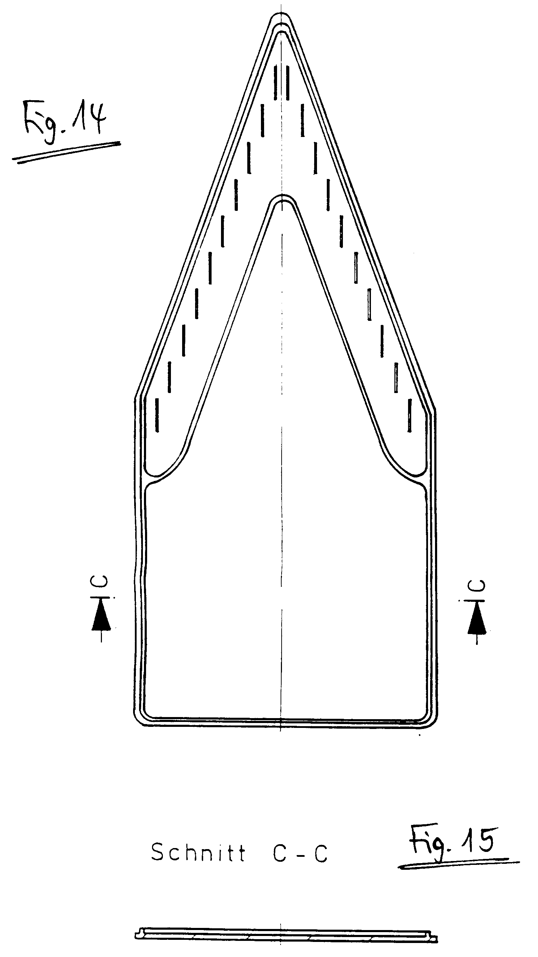

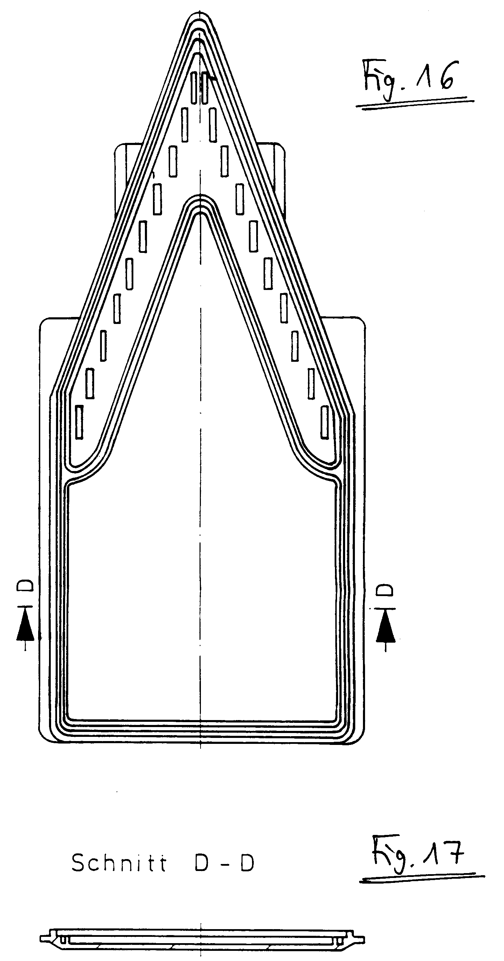

In den Fig. 14 bis 17 ist eine weitere Ausführungsform einer unteren Führungsplatte gezeigt, die aus einem Unterteil und einem Oberteil besteht, zwischen die der Blechstreifen eingelegt ist und die durch eine Nut-Feder-Verbindung miteinander verbunden sind. Die Ausführungsform gemäß den Fig. 14 bis 17 unterscheidet sich von derjenigen gemäß der Fig. 8 bis 13 dadurch, daß sie für einen Blechstreifen der in den Fig. 5 bis 7 gezeigten Art bestimmt ist.

Durch die Nut-Feder-Verbindung 25, 25', 31, 31' wird die untere Führungsplatte 2 stabilisiert. Ferner wird dadurch verhindert, daß Wasser und mit ihm Bakterien in die untere Führungsplatte 2 eindringen können, wodurch die Hygiene erheblich verbessert wird. Das Eindringen von Wasser in den Bereich, in dem sich der Blechstreifen 11 befindet, wird durch die weitere, innere Nut-Feder-Verbindung 25', 31' noch besonders zuverlässig verhindert. Diese weitere Nut-Feder-Verbindung 25', 31' ist derart ausgestaltet, daß sie zusammen mit dem vorderen, spitz zulaufenden Teil der Nut- Feder-Verbindung 25, 31 den Blechstreifen 11 eng umschließt.

Anstelle einer Nut-Feder-Verbindung kann auch eine andere Verbindungsart vorgesehen werden. Besonders vorteilhaft ist eine Verbindung durch Ultraschallschweißen.

## Patentansprüche

1. Küchengerät zum Schneiden von Obst, Gemüse oder dergleichen mit einer unteren Führungsplatte (2) und einer sich daran anschließenden oberen Führungsplatte (3), die an ihrer Vorderkante ein mit ihrer Ebene fluchtendes, horizontales Schneidmesser (5) aufweist, wobei in der unteren Führungsplatte (2) mehrere senkrecht zu ihrer Ebene verlaufende vertikale Schneidmesser (6) vorgesehen sind, die aus einem Blechstreifen gebildet sind,
dadurch gekennzeichnet,
daß der Blechstreifen (11; 21) eine mit der Spitze in Schneidrichtung (1) weisende V-Form aufweist und an seiner in Schneidrichtung (1) hinteren Längsseite Ecken (12) aufweist, die von der in Schneidrichtung (1) folgenden Ecke (12) weg weisen und die längs einer in Schneidrichtung (1) verlaufenden Kante (13) hochgebogen sind.

2. Küchengerät nach Anspruch 1, dadurch gekennzeichnet, daß die Ecken (12) einen spitzen Winkel (15) einschließen.

3. Küchengerät nach Anspruch 1 oder 2, dadurch gekennzeichnet, daß der Blechstreifen (11; 21) an seiner in Schneidrichtung (1) hinteren Längsseite in vorzugsweise regelmäßigen Abständen eingeschnitten (14) ist.

4. Küchengerät nach einem der vorhergehenden Ansprüche, dadurch gekennzeichnet, daß der Blechstreifen (11; 21) in die untere Führungsplatte (2) eingelassen ist.

5. Küchengerät nach einem der Ansprüche 1 bis 3, dadurch gekennzeichnet, daß die untere Führungsplatte (2) aus einem Unterteil (22) und einem Oberteil (23) besteht, zwischen die der Blechstreifen (11; 21) eingelegt ist und die durch eine Nut-Feder-Verbindung (25, 31) miteinander verbunden sind.

## Claims

1. Kitchen appliance for cutting fruit, vegetables or the like, having a bottom guide plate (2) and a top guide plate (3) which adjoins said bottom guide plate and, on its front edge, has a horizontal cutter (5) aligned with the plane of said top guide plate, there being provided in the bottom guide plate (2) a plurality of vertical cutters (6) which run perpendicularly to the plane of said bottom guide plate and are formed from a sheet-metal strip, characterized in that the sheet-metal strip (11; 21) is of a V-shape, the point being oriented in the cutting direction (1), and has corners (12) on its rear longitudinal side, as seen in the cutting direction (1), each of these corners being oriented away from the following corner (12), as seen in the cutting direction (1), and being bent upwards along an edge (13) running in the cutting direction (1).

2. Kitchen appliance according to Claim 1, characterized in that the corners (12) enclose an acute angle (15).

3. Kitchen appliance according to Claim 1 or 2, characterized in that cuts are made (14), preferably at regular intervals, on the rear longitudinal side, as seen in the cutting direction (1), of the sheet-metal strip (11; 21).

4. Kitchen appliance according to one of the preceding claims, characterized in that the sheet-metal strip (11; 21) is fitted into the bottom guide plate (2).

5. Kitchen appliance according to one of Claims 1 to 3, characterized in that the bottom guide plate (2) comprises a lower part (22) and an upper part (23), between which the sheet-metal strip (11; 21) is introduced and which are connected to one another by a groove/tongue connection (25, 31).

## Revendications

1. Dispositif culinaire pour couper des fruits, des légumes ou des produits similaires avec une plaque de guidage inférieure (2) et une plaque de guidage supérieure (3) faisant suite à celle-ci qui présente à son arête avant un couteau tranchant (5) horizontal, aligné avec le plan de celle-ci, dans la plaque de guidage inférieure (2) étant prévus plusieurs couteaux tranchants verticaux (6) s'étendant perpendiculairement au plan de celle-ci, qui sont formés par une bande en tôle, caractérisé en ce que la bande en tôle (11; 21) a une forme en V orientée avec la pointe dans la direction de coupe (1) et présente à son côté longitudinal arrière dans la direction de coupe (1) des coins (12) qui sont orientés au loin du coin (12) faisant suite dans la direction de coupe (1) et qui sont recourbés vers le haut le long d'une arête (13) s'étendant dans la direction de coupe (1).

2. Dispositif culinaire selon la revendication 1, caractérisé en ce que les coins (12) forment un angle aigu (15).

3. Dispositif culinaire selon la revendication 1 ou 2, caractérisé en ce que la bande en tôle (11; 21) présente des entailles (14) à son côté longitudinal arrière dans la direction de coupe (1), écartées de préférence uniformément.

4. Dispositif culinaire selon l'une des revendications précédentes, caractérisé en ce que la bande en tôle (11; 21) est encastrée dans la plaque de guidage inférieure (2).

5. Dispositif culinaire selon l'une des revendications 1 à 3, caractérisé en ce que la plaque de guidage inférieure (2) est constituée d'une partie inférieure (22) et d'une partie supérieure (23) entre lesquelles est placée la bande en tôle (11; 21), et qui sont reliées l'une à l'autre par un assemblage à languette et rainure (25; 31).
